# EUROPÄISCHE PATENTANMELDUNG

(11) **EP 4 712 150 A1**
(43) Veröffentlichungstag der Anmeldung: **18.03.2026**
(21) Anmeldenummer: 25155502.5
(22) Anmeldetag: 03.02.2025
(51) Int. Cl.: H01M 4/04

(54) **ELEKTRODENHERSTELLVERFAHREN UND ELEKTRODENHERSTELLEINRICHTUNG ZUM HERSTELLEN VON ELEKTRODENSTÜCKEN FÜR BATTERIEZELLEN**

(30) Priorität: 13.09.2024 DE 102024002939
(71) Anmelder: Grob-Werke GmbH & Co. KG, 87719 Mindelheim (DE)
(72) Erfinder: Weizmann, Stefan, 89343 Jettingen-Scheppach (DE)

(57) **Zusammenfassung**

Die vorliegende Erfindung betrifft ein Elektrodenherstellverfahren (1) zum Herstellen von Elektrodenstücken (2), insbesondere Kathoden, für Batteriezellen, umfassend die folgenden Schritte: Bereitstellen eines Elektrodenbandmaterials (3), das einen beschichteten Bereich (3.1) und an wenigstens einer Seite des beschichteten Bereichs (3.1) einen unbeschichteten Bereich (3.2) aufweist; Fördern des Elektrodenbandmaterials (3) durch eine Förderstrecke (4), wobei zur Erzeugung einer vorbestimmten Bahnspannung eine Zugkraft größer als 0 N auf das Elektrodenbandmaterial (3) aufgebracht wird; und das Elektrodenbandmaterial (3) zumindest abschnittsweise auf eine Erwärmungstemperatur gleich oder größer als 50°C und/oder gleich oder kleiner als 110°C erwärmt wird. Ferner betrifft die Erfindung auch eine Elektrodenherstelleinrichtung (5) zum Herstellen von Elektrodenstücken (2), insbesondere Kathoden, für Batteriezellen.

## Beschreibung

Die vorliegende Erfindung bezieht sich auf ein Elektrodenherstellverfahren sowie eine Elektrodenherstelleinrichtung zum Herstellen von Elektrodenstücken für Batteriezellen.

Beim Herstellungsprozess von Elektrodenmaterialien, insbesondere von Kathodenmaterialien, für Batteriezellen, insbesondere Lithium-Ionen-Batteriezellen, kommt es häufig zu Spannungen im Trägermaterial und/oder der Beschichtung, die unter anderem schon durch geringe Ungenauigkeiten im Herstellungsprozess des Elektrodenmaterials, d.h., des Rollen- bzw. Bandmaterials eingebracht werden können. Diese Spannungen können dann nach dem Vereinzeln, also nach dem Schneiden des Bandmaterials in einzelne Elektrodenstücke, dazu, dass sich die vereinzelten Elektrodenstücke krümmen und in diesem gekrümmten Zustand an die nachfolgenden Prozessstationen übergeben wird. Die Krümmung der einzelnen Elektrodenstücke, die auch als "Bananeneffekt" bekannt ist, kann sowohl in einer Längenrichtung als auch in einer Breitenrichtung der vereinzelten Elektrodenstücke auftreten und erschwert die nachfolgenden Prozesse, wie bspw. das Magazinieren, das Stapeln etc. Dadurch können die Effizient und Qualität der nachfolgenden Prozessschritte durch diese Krümmung beeinträchtigt werden. Ein Ausgleichen dieser Krümmung in den nachfolgenden Prozessen ist mit Mehraufwand und zusätzlichen Kosten verbunden.

Es hat sich nunmehr herausgestellt, dass ein Bedarf besteht, ein bekanntes Elektrodenherstellverfahren und/oder eine bekannte Elektrodenherstelleinrichtung zum Herstellen von Elektrodenstücken zu verbessern. Insbesondere besteht ein weiterer Bedarf, ein Elektrodenherstellverfahren und/oder eine Elektrodenherstelleinrichtung zum Herstellen von Elektrodenstücken bereitzustellen, das/die in der Lage ist, Krümmungen der vereinzelten Elektrodenstücke aufgrund von in dem Bandmaterial vorliegenden Spannungen zu reduzieren.

Vor diesem Hintergrund ist es eine Aufgabe der vorliegenden Erfindung ein verbessertes Elektrodenherstellverfahren und/oder eine verbesserte Elektrodenherstelleinrichtung bereitzustellen, das/die insbesondere eine Krümmung der vereinzelten Elektrodenstücke aufgrund von in dem Bandmaterial vorliegenden Spannungen reduziert.

Diese und andere Aufgaben, die beim Lesen der nachfolgenden Beschreibung noch genannt werden oder vom Fachmann erkannt werden können, werden durch den Gegenstand der unabhängigen Ansprüche gelöst. Vorteilhafte Ausführungsformen und Weiterbildungen sind den Unteransprüchen und der nachfolgenden Beschreibung zu entnehmen.

Ein erster Aspekt der Erfindung bezieht sich auf ein Elektrodenherstellverfahren zum Herstellen von Elektrodenstücken, insbesondere Kathoden, für Batteriezellen. Das Verfahren umfasst die folgenden Schritte, die nicht zwingend in angegebener Reihenfolge durchzuführen sind:
Bereitstellen eines Elektrodenbandmaterials, das einen beschichteten Bereich und aufweist;
Fördern des Elektrodenbandmaterials durch eine Förderstrecke, wobei
   zur Erzeugung einer vorbestimmten bzw. (vor-)definierten Bahnspannung eine Zugkraft größer als 0 N, insbesondere größer als etwa 5 N, weiter insbesondere größer als etwa 10 N, ferner insbesondere größer als etwa 20 N, auf das Elektrodenbandmaterial aufgebracht wird; und
   das Elektrodenbandmaterial zumindest abschnittsweise auf eine Erwärmungstemperatur gleich oder größer als 50°C und/oder gleich oder kleiner als 110°C, insbesondere auf eine Erwärmungstemperatur gleich oder größer als 60°C und/oder gleich oder kleiner als 100°C, weiter insbesondere auf eine Erwärmungstemperatur gleich oder größer als 70°C und/oder gleich oder kleiner als 90°C, erwärmt wird.

Das Elektrodenbandmaterial ist insbesondere ein Kathodenbandmaterial, aus dem als vereinzelte Elektrodenstücke, Kathodenstücke hergestellt werden. Alternativ kann das Elektrodenbandmaterials auch ein Anodenbandmaterial sein, aus dem durch die sogenannte Vereinzelung, vereinzelte Anodenstücke hergestellt werden.

Der Ausdruck "Elektrodenbandmaterial" bezeichnet hierbei eine Elektrodenfolie, die eine Trägerfolie aufweist, die zumindest teilweise mit einem sogenannten Aktivmaterial beschichtet ist. Das Elektrodenbandmaterial ist ein kontinuierliches Elektrodenband, das in der Regel in Form von Spulen oder Rollen, sogenannten "Coils" bereitgestellt wird.

Die Vereinzelung ist ein Prozessschritt bei der Elektrodenherstellung, bei dem das Elektrodenbandmaterial in einzelne Elektrodenstücke geschnitten wird. Als "Vereinzeln" wird also das Heraustrennen von Elektrodenblättern bzw. Elektrodenstücken aus einem kontinuierlichen Elektrodenband (Elektrodenbandmaterial) bezeichnet.

Die Bahnspannung kann insbesondere auch bis etwa 35 N oder größer erhöht werden. Insbesondere ist die Höhe der Bahnspannung, die auf das Elektrodenbandmaterial aufgebracht werden kann, durch die Bauart der Maschine begrenzt. Die Erhöhung der auf das Elektrodenbandmaterial aufgebrachten Bahnspannung in Kombination mit der Erwärmung des Elektrodenbandmaterials führen dazu, dass die im Nachgang durch die sogenannte Vereinzelung erzeugten Elektrodenstücke eine geringere Krümmung aufweisen als Elektrodenstücke, die aus demselben Bandmaterial erzeugt werden, jedoch ohne die vorstehend beschriebene Behandlung mit erhöhter Bahnspannung und gleichzeitiger Erwärmung. Insbesondere kann durch die Erhöhung der Bahnspannung und die kontrollierte Erwärmung des Elektrodenbandmaterials der Krümmungseffekt, bzw. die Krümmung der vereinzelten Elektrodenstücke um etwas 50-90%, weiter insbesondere um etwa 60-80% reduziert werden.

Man kann also sagen, dass die Anwendung einer höheren Bahnspannung und eine, insbesondere homogene, Erwärmung des Elektrodenmaterials effektive Maßnahmen darstellen, um die Krümmung bzw. den Krümmungseffekt zu reduzieren und somit die Qualität der weiter zu verarbeitenden Elektrodenstücke, und infolgedessen auch die Qualität der Endprodukte, zu verbessern.

Gemäß einer Ausführungsform ist das Elektrodenbandmaterial ein vorgefertigtes Elektrodenbandmaterial, das als beschichteten Bereich einen Aktivmaterialbereich aufweist, und der unbeschichtete Bereich an zumindest einer Seite des Aktivmaterialbereichs als, insbesondere freigeschnittene, Ableiterfahnen ausgebildet ist.

Gemäß einer Ausführungsform ist das Elektrodenbandmaterial ein unbearbeitetes Elektrodenbandmaterial, das als beschichteten Bereich einen Aktivmaterialbereich aufweist, und der unbeschichtete Bereich an zumindest einer Seite des Aktivmaterialbereichs als nicht-zugeschnittener Ableiterbereich ausgebildet ist.

Der Ausdruck "vorgefertigtes Elektrodenbandmaterial" bezeichnet hier ein Elektrodenbandmaterial, das bereits den Prozess des "Notching" durchlaufen hat. Der Ausdruck "unbearbeitetes Elektrodenbandmaterial" bezeichnet hier ein "rohes" Elektrodenbandmaterials, das den Prozess des "Notching" noch nicht durchlaufen hat und somit noch einen sich kontinuierlich erstreckenden unbeschichteten Bereich aufweist.

Beim Notching wird das (getrocknete) rohe bzw. unbearbeitete Elektrodenbandmaterial abgewickelt und die Kontur der Elektroden im bahnförmigen Zustand vorgeformt, wobei insbesondere aus dem unbeschichteten Bereich die Ableiterfahnen freigeschnitten werden. Nach dem Notching kann das "vorgefertigte Elektrodenbandmaterial" entweder aufgerollt oder direkt dem Vereinzeln zugeführt werden.

Somit kann das vorstehend und nachstehend beschriebene, insbesondere erfindungsgemäße, Verfahren sowohl vor dem Notching als auch nach dem Notching in den Prozess zur Herstellung von Elektrodenstücken integriert werden. Mit anderen Worten kann man sagen, dass das Elektrodenbandmaterial das vorstehend und nachstehend beschriebene, insbesondere erfindungsgemäße, Verfahren vor dem Schritt der Vereinzelung durchlaufen haben.

Gemäß einer Ausführungsform ist die zur Erzeugung der vorbestimmten Bahnspannung auf das Elektrodenbandmaterial aufgebrachte Zugkraft gleich oder größer als 20 N und/oder gleich oder kleiner als 60 N, insbesondere gleich oder größer als 30 N und/oder gleich oder kleiner als 50 N.

Allgemein kann man sagen, je höher die auf das Elektrodenbandmaterial aufgebrachte Zugkraft, desto höher die erzeugte Bahnspannung, und je höher die Bahnspannung, desto stärker wird das Material in seiner Längsrichtung bzw. in Förderrichtung gespannt. Eine solche Bahnspannung kann, insbesondere in Kombination mit eingebrachter Wärme, dazu führen, dass sich ein inneres Gefüge des Elektrodenbandmaterials oder zumindest eines Teils des Elektrodenbandmaterials, verändert, ohne dass das Elektrodenbandmaterial sich äußerlich erkennbar ändert.

Gemäß einer Ausführungsform wird das Elektrodenbandmaterial mittels zumindest einer Heizeinrichtung, insbesondere zumindest einem Heizstrahler, weiter insbesondere zumindest einem Infrarotstrahler, auf die Erwärmungstemperatur gleich oder größer als 50°C und/oder gleich oder kleiner als 110°C, insbesondere gleich oder größer als 60°C und/oder gleich oder kleiner als 100°C, weiter insbesondere gleich oder größer als 70°C und/oder gleich oder kleiner als 90°C, erwärmt.

Der Infrarotstrahler ist insbesondere ein kurzwelliger Infrarotstrahler mit sogenannter A-Strahlung, die verglichen mit anderen Infrarotstrahlungen, wie B-Strahlung oder C-Strahlung, die größte Eindringtiefe zur Erwärmung des Materials aufweist. Insbesondere bei einer Erwärmungstemperatur von etwa 120°C kann es zu einer Beschädigung des Materials im beschichteten Bereich des Elektrodenbandmaterials kommen, was durch eine entsprechend niedrigere Erwärmungstemperatur vermieden werden soll. Der Begriff "Erwärmungstemperatur" beschreibt hier insbesondere die Temperatur, die das Elektrodenbandmaterial selbst aufgrund der Erwärmung durch die zumindest eine Heizeinrichtung aufweist. Das bedeutet, dass die Temperatur, auf die die zumindest eine Heizeinrichtung reguliert bzw. eingestellt wird, auch größer sein kann als die Erwärmungstemperatur.

Insbesondere wird das Elektrodenbandmaterial mittels zumindest zwei Heizeinrichtungen, insbesondere zumindest zwei IR-Strahler, auf die Erwärmungstemperatur erwärmt, wobei die zumindest zwei Heizeinrichtungen gegenüberliegend mit einem vorbestimmten Abstand zum Elektrodenbandmaterial, insbesondere zu dem beschichteten Bereich des Elektrodenbandmaterials, und insbesondere in Förderrichtung gesehen zumindest leicht versetzt, angeordnet sind. Durch eine solche Anordnung kann eine homogene Erwärmung des Elektrodenbandmaterials erreicht werden.

Gemäß einer Ausführungsform umfasst das Elektrodenherstellverfahren ferner einen oder mehrere der folgenden Schritte:
Fördern des mit der vorbestimmten Bahnspannung beaufschlagten und zumindest abschnittsweise auf die Erwärmungstemperatur erwärmten Elektrodenbandmaterials zu einer Schneideinrichtung,
Freischneiden von Ableiterfahnen aus dem Ableiterbereich, und/oder
Vereinzeln eines mit freigeschnittener Ableiterfahne versehenen Elektrodenstücks durch Durchschneiden des Elektrodenbandmaterials, insbesondere im Aktivmaterialbereich.

Beim Fördern des mit der vorbestimmten Bahnspannung beaufschlagten und zumindest abschnittsweise erwärmten Elektrodenbandmaterials zur Schneideinrichtung kühlt das abschnittsweise erwärmte Elektrodenbandmaterial wieder auf die

Umgebungstemperatur ab, wobei die Bahnspannung kontinuierlich auf das Elektrodenbandmaterial aufgebracht wird. Das heißt, das Elektrodenbandmaterial wird bei der herrschenden Umgebungstemperatur vereinzelt.

Ein weiterer Aspekt der Erfindung bezieht sich auf eine Elektrodenherstelleinrichtung zum Herstellen von Elektrodenstücken, insbesondere Kathoden, für Batteriezellen. Die Elektrodenherstelleinrichtung umfasst:
eine Elektrodenbandmaterial-Bereitstelleinrichtung zum Bereitstellen eines Elektrodenbandmaterials, wobei das Elektrodenbandmaterial einen beschichteten Bereich und an wenigstens einer Seite des beschichteten Bereichs einen unbeschichteten Bereich aufweist,
eine Elektrodenbandmaterial-Förderstrecke zum Fördern des

Elektrodenbandmaterials (in eine vorbestimmte Förderrichtung), wobei
die Elektrodenbandmaterial-Förderstrecke dazu eingerichtet ist, beim Fördern zur Erzeugung einer vorbestimmten Bahnspannung eine Zugkraft größer als 0 N, insbesondere größer als etwa 5 N, weiter insbesondere größer als etwa 10 N, ferner insbesondere größer als etwa 15 N, auf das Elektrodenbandmaterial aufzubringen, und
eine Elektrodenbandmaterial-Heizeinrichtung, die im Bereich der Elektrodenband-Förderstrecke angeordnet und dazu eingerichtet ist, das Elektrodenbandmaterial zumindest abschnittsweise auf eine Erwärmungstemperatur gleich oder größer als 50°C und gleich oder kleiner als 110°C, insbesondere gleich oder größer als 60°C und gleich oder kleiner als 100°C, weiter insbesondere gleich oder größer als 70°C und gleich oder kleiner als 90°C zu erwärmen.

Das Aufbringen einer erhöhten Bahnspannung in Kombination mit der Erwärmung des Elektrodenbandmaterials auf die Erwärmungstemperatur führen dazu, dass die im Nachgang durch die sogenannte Vereinzelung erzeugten Elektrodenstücke eine geringere Krümmung aufweisen als Elektrodenstücke, die aus demselben Bandmaterial erzeugt werden, ohne die vorstehend beschriebene Behandlung mit erhöhter Bahnspannung und gleichzeitiger Erwärmung. Insbesondere kann durch die Erhöhung der Bahnspannung und die kontrollierte Erwärmung des Elektrodenbandmaterials der Krümmungseffekt, bzw. die Krümmung der vereinzelten Elektrodenstücke um etwas 50-90%, weiter insbesondere um etwa 60-80% reduziert werden.

Man kann also sagen, dass die Anwendung einer höheren Bahnspannung und eine, insbesondere homogene, Erwärmung des Elektrodenmaterials effektive Maßnahmen darstellen, um die Krümmung bzw. den Krümmungseffekt zu reduzieren und somit die Qualität der weiter zu verarbeitenden Elektrodenstücke, und infolgedessen auch die Qualität der Endprodukte, zu verbessern.

Die Bahnspannung ist über eine Steuerung, die dazu eingerichtet ist, eine Anlage, insbesondere eine Elektrodenherstelleinrichtung, zu steuern, entsprechend eingestellt werden. Darüber hinaus ist die Elektrodenbandmaterial-Heizeinrichtung einfach in die Elektrodenband-Förderstrecke einer bestehenden Anlage integrierbar, insbesondere ohne, dass zusätzlicher Bauraum geschaffen werden muss. Darüber hinaus kann die Elektrodenbandmaterial-Heizeinrichtung wahlweise ein- bzw. ausschaltbar sein. Das bedeutet, dass wahlweise entschieden werden kann, ob die Elektrodenbandmaterial-Heizeinrichtung eingeschaltet oder ausgeschaltet ist. Dies kann bspw. in Abhängigkeit der Qualität des zu verarbeitenden Elektrodenbandmaterials geschehen.

Gemäß einer Ausführungsform ist das Elektrodenbandmaterial ein vorgefertigtes Elektrodenbandmaterial, das als beschichteten Bereich einen Aktivmaterialbereich aufweist, und der unbeschichtete Bereich an zumindest einer Seite des Aktivmaterialbereichs als, insbesondere freigeschnittene, Ableiterfahnen ausgebildet ist.

Gemäß einer Ausführungsform ist das Elektrodenbandmaterial ein unbearbeitetes Elektrodenbandmaterial, das als beschichteten Bereich einen Aktivmaterialbereich aufweist, und der unbeschichtete Bereich an zumindest einer Seite des Aktivmaterialbereichs als nicht-zugeschnittener, also als ein durchgängiger bzw. kontinuierlich ausgebildeter, Ableiterbereich ausgebildet ist.

Das bedeutet, dass die Elektrodenbandmaterial-Bereitstelleinrichtung dazu eingerichtet ist, entweder vorgefertigtes oder unbearbeitetes Elektrodenbandmaterial bereitzustellen.

Der Ausdruck "vorgefertigtes Elektrodenbandmaterial" bezeichnet hier ein Elektrodenbandmaterial, das bereits den Prozess des "Notching" durchlaufen hat. Der Ausdruck "unbearbeitetes Elektrodenbandmaterial" bezeichnet hier ein "rohes" Elektrodenbandmaterials, das den Prozess des "Notching" noch nicht durchlaufen hat und somit noch einen sich kontinuierlich erstreckenden unbeschichteten Bereich aufweist.

Beim Notching wird das (getrocknete) rohe bzw. unbearbeitete Elektrodenbandmaterial abgewickelt und die Kontur der Elektroden im bahnförmigen Zustand vorgeformt, wobei insbesondere aus dem unbeschichteten Bereich die Ableiterfahnen freigeschnitten werden. Nach dem Notching kann das "vorgefertigte Elektrodenbandmaterial" entweder aufgerollt oder direkt dem Vereinzeln zugeführt werden.

Gemäß einer Ausführungsform ist die Elektrodenbandmaterial-Förderstrecke dazu eingerichtet, beim Fördern zur Erzeugung der (vorbestimmten) Bahnspannung eine Zugkraft gleich oder größer als 20 N und/oder gleich oder kleiner als 60 N, insbesondere gleich oder größer als 30 N und/oder gleich oder kleiner als 50 N, auf das Elektrodenbandmaterial aufzubringen.

Allgemein kann man sagen, je höher die auf das Elektrodenbandmaterial aufgebrachte Zugkraft, desto höher die erzeugte Bahnspannung, und je höher die Bahnspannung, desto stärker wird das Material in seiner Längsrichtung bzw. in Förderrichtung gespannt. Eine solche Bahnspannung kann, insbesondere in Kombination mit eingebrachter Wärme, dazu führen, dass sich ein inneres Gefüge des Elektrodenbandmaterials oder zumindest eines Teils des Elektrodenbandmaterials, verändert, ohne dass das Elektrodenbandmaterial sich äußerlich erkennbar ändert.

Gemäß einer Ausführungsform weist die Elektrodenbandmaterial-Heizeinrichtung zumindest einen Heizstrahler, insbesondere zumindest einen Infrarotstrahler, auf.

Der Infrarotstrahler ist insbesondere ein kurzwelliger Infrarotstrahler mit sogenannter A-Strahlung, die verglichen mit anderen Infrarotstrahlungen, wie B-Strahlung oder C-Strahlung, die größte Eindringtiefe zur Erwärmung des Materials aufweist.

Gemäß einer Ausführungsform ist der zumindest eine Heizstrahler im Wesentlichen senkrecht zu einer Elektrodenbandmaterial-Oberfläche, insbesondere im Wesentlichen senkrecht zur Förderrichtung des Elektrodenbandmaterials, und/oder beabstandet zu der Elektrodenbandmaterial-Oberfläche angeordnet.

Dabei kann der zumindest eine Heizstrahler entweder oberhalb der Elektrodenbandmaterial-Oberfläche oder unterhalb der Elektrodenbandmaterial-Oberfläche angeordnet sein.

Insbesondere ist der zumindest eine Heizstrahler so gewählt und/oder mit dem entsprechenden Abstand zum Elektrodenbandmaterial positioniert, dass das Elektrodenbandmaterial beim Passieren des zumindest einen Heizstrahlers auf eine Temperatur gleich oder größer als 50°C und/oder gleich oder kleiner als 110°C, insbesondere gleich oder größer als 60°C und/oder gleich oder kleiner als 100°C, weiter insbesondere gleich oder größer als 70°C und/oder gleich oder kleiner als 90°C, erwärmt wird. Insbesondere bei einer Erwärmungstemperatur von etwa 120°C kann es zu einer Beschädigung des Materials im beschichteten Bereich des Elektrodenbandmaterials kommen, was durch eine entsprechend niedrigere Erwärmungstemperatur vermieden werden soll. Der Begriff "Erwärmungstemperatur" beschreibt hier insbesondere die Temperatur, die das Elektrodenbandmaterial selbst aufgrund der Erwärmung durch die zumindest eine Heizeinrichtung aufweist. Das bedeutet, dass die Temperatur, auf die die zumindest eine Heizeinrichtung reguliert bzw. eingestellt wird, auch größer sein kann als die Erwärmungstemperatur.

Gemäß einer Ausführungsform weist die Elektrodenbandmaterial-Heizeinrichtung zumindest zwei Heizstrahler, insbesondere zumindest zwei Infrarotstrahler, auf, die im Wesentlichen senkrecht zu einer Elektrodenbandmaterial-Oberfläche, insbesondere im Wesentlichen senkrecht zur Förderrichtung des Elektrodenbandmaterials und/oder beabstandet zu der Elektrodenbandmaterial-Oberfläche auf derselben Seite des Elektrodenbandmaterials und/oder auf einander gegenüberliegenden Seiten des Elektrodenbandmaterials angeordnet sind. Die auf einander gegenüberliegenden Seiten angeordneten Heizeinrichtungen können insbesondere in Förderrichtung zumindest leicht zueinander versetzt angeordnet sein.

Dadurch kann eine gleichmäßigere und/oder homogenere Erwärmung des Elektrodenbandmaterials erreicht werden. Dadurch kann die Krümmungsreduzierung weiter verbessert werden.

Gemäß einer Ausführungsform umfasst die Elektrodenherstelleinrichtung ferner eine Schneideinrichtung zum Freischneiden von Ableiterfahnen aus dem Ableiterbereich und/oder zum Vereinzeln eines mit, insbesondere freigeschnittener, Ableiterfahne versehenen Elektrodenstücks durch Durchschneiden des Elektrodenbandmaterials, insbesondere im Aktivmaterialbereich.

Insbesondere schneidet die Schneideinrichtung das zuvor erwärmte Elektrodenbandmaterial bei Umgebungstemperatur frei bzw. vereinzelt es, wobei die Bahnspannung kontinuierlich auf das Elektrodenbandmaterial aufgebracht wird. Das heißt, das Elektrodenbandmaterial wird bei der herrschenden Umgebungstemperatur vereinzelt. Das bedeutet, dass das Elektrodenbandmaterial nach abgeschlossener Wärmebehandlung vereinzelt wird. Somit sind die Prozesse, die innerhalb des Elektrodenbandmaterials durch die Erhöhung der Bahnspannung und das Erwärmen auftreten und zur Krümmungsreduzierung bei den vereinzelten Elektrodenstücken führen, abgeschlossen.

Diese und weitere, die Erfindung verbessernde Maßnahmen werden nachstehend mit der Beschreibung bevorzugter Ausführungsbeispiele der Erfindung anhand der Figuren näher dargestellt.
- Fig. 1: zeigt eine schematische und beispielhaftes Flussdiagrammdarstellung eines Elektrodenherstellverfahrens gemäß einer Ausführungsform der Erfindung.
- Fig. 2: zeigt eine schematische und beispielhafte Darstellung einer Elektrodenherstelleinrichtung gemäß einer Ausführungsform der Erfindung.
- Fig. 3: zeigt eine schematische und beispielhafte Darstellung eines Abschnitts einer Elektrodenband-Förderstrecke einer Elektrodenherstelleinrichtung gemäß einer Ausführungsform der Erfindung von oben.
- Fig. 4: zeigt eine schematische und beispielhafte Darstellung eines Abschnitts einer Elektrodenband-Förderstrecke einer Elektrodenherstelleinrichtung gemäß einer Ausführungsform der Erfindung in einer Seitenansicht.
- Fig. 5: zeigt eine schematische, vereinfachte und beispielhafte Darstellung einer Schneideinrichtung einer Elektrodenherstelleinrichtung gemäß einer Ausführungsform der Erfindung.
- Fig. 6: zeigt eine schematische und beispielhafte Darstellung eines Elektrodenstücks gemäß einer Ausführungsform der Erfindung von oben.
- Fig. 7: zeigt schematische, vereinfachte und beispielhafte Darstellungen von Elektrodenstücken in einer Seitenansicht zur Verdeutlichung einer Krümmung ohne Durchlaufen (a) und mit Durchlaufen (b) eines Elektrodenherstellverfahrens gemäß einer Ausführungsform der Erdfindung.

Die Figuren sind lediglich schematischer Natur und dienen nur dem Verständnis der Erfindung. Die gleichen Elemente sind mit denselben Bezugszeichen versehen.

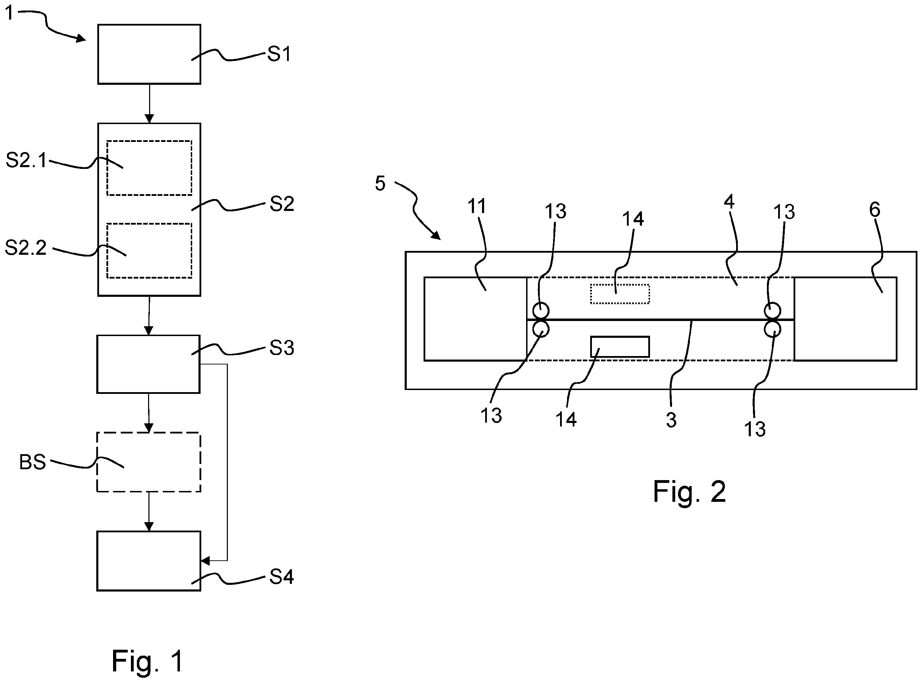

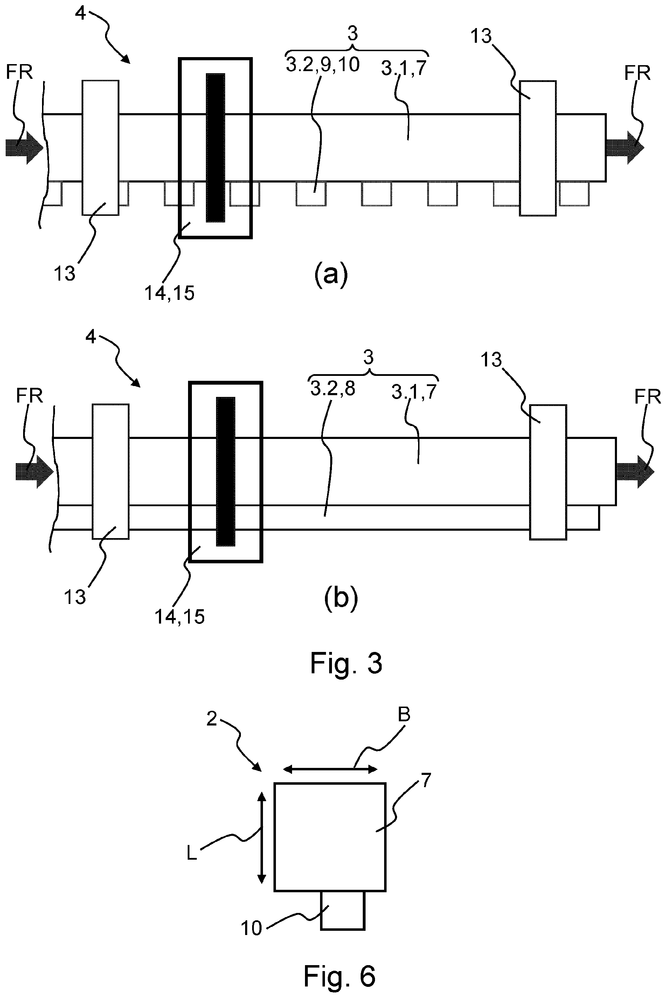

**Fig. 1** zeigt schematisch und beispielhaft ein Elektrodenherstellverfahren 1 zum Herstellen von Elektrodenstücken 2 (siehe auch Fig. 6) für Batteriezellen gemäß einer beispielhaften Ausführungsform der Erfindung. Das in Fig. 1 beispielhaft gezeigte Elektrodenherstellverfahren 1 umfasst die Schritte:
Schritt S1: Bereitstellen eines Elektrodenbandmaterials 3 (siehe auch Fig. 2 bis Fig. 4); Schritt S2: Fördern des Elektrodenbandmaterials 3 durch eine Förderstrecke 4 einer Elektrodenherstelleinrichtung 5;
Schritt S3: Fördern des Elektrodenbandmaterials zu einer Schneideinrichtung 6 der Elektrodenherstelleinrichtung 5; und
Schritt S4: Vereinzeln des Elektrodenbandmaterials 3 in Elektrodenstücke 2.

Das Elektrodenbandmaterial 3 weist einen beschichteten Bereich 3.1 und einen unbeschichteten Bereich 3.2 auf, die nebeinanderliegend bzw. benachbart zueinander angeordnet sind. Der beschichtete Bereich 3.1 ist insbesondere als ein Aktivmaterialbereich 7 ausgebildet. Der unbeschichtete Bereich 3.2 kann als nicht-zugeschnittener Ableiterbereich 8 oder als zugeschnittener Ableiterbereich 9, der insbesondere freigeschnittene Ableiterfahnen 10 umfasst, ausgebildet sein. Das Elektrodenbandmaterial 3 umfassend den als Aktivmaterialbereich 7 ausgebildeten beschichteten Bereich 3.1 und den als nicht-zugeschnittenen Ableiterbereich 8 ausgebildeten unbeschichteten Bereich 3.2 wird hier auch als unbearbeitetes Elektrodenbandmaterial 3 bezeichnet.

Das Elektrodenbandmaterial 3 umfassend den als Aktivmaterial 7 ausgebildeten beschichteten Bereich 3.1 und den als zugeschnittenen Ableiterbereich 9 ausgebildeteten unbeschichteten Bereich 3.2, der insbesondere freigeschnittene Ableiterfahnen 10 umfasst, wird hier auch als vorgefertigtes Elektrodenbandmaterial 3 bezeichnet.

Wenn das durch Schritt S1 bereitgestellte Elektrodenbandmaterial 3 ein unbearbeitetes Elektrodenbandmaterial 3 ist, wird dieses nach dem Durchführen des Schritts S2, insbesondere nach Schritt S3 und vor Schritt S4, in einem Bearbeitungsschritt BS dahingehend bearbeitet, dass Ableiterfahnen 10 aus dem unbeschichteten Bereich 3.2 freigeschnitten werden und/oder das Aktivmaterialbereich 7 auf eine definierte Breite zugeschnitten wird. Das Freischneiden der Ableiterfahnen 10 wird auch als "Notching" bezeichnet, und das Zuschneiden des Aktivmaterialbereich 7 auf die definierte Breite wird auch als "Slitting" bezeichnet. Wenn das durch Schritt S1 bereitgestellte Elektrodenbandmaterial 3 ein vorgefertigtes Elektrodenbandmaterial 3 ist, wurde der Bearbeitungsschritt BS in einem dem Elektrodenherstellverfahren 1 vorgelagerten Verfahren bereits durchgeführt, und der Bearbeitungsschritt BS entfällt in dem Elektrodenherstellverfahren 1.

Beim Fördern des Elektrodenbandmaterials 3 durch die Förderstrecke 4 der Elektrodenherstelleinrichtung 5 wird zur Erzeugung einer vorbestimmten/definierten Bahnspannung eine Zugkraft auf das Elektrodenbandmaterial 3 aufgebracht (Schritt S2.1). Die Zugkraft ist größer als 0 N, insbesondere größer als 5 N, weiter insbesondere größer als 10 N, ferner insbesondere größer als 15 N. Durch die aufgebrachte Zugkraft wird das durch die Förderstrecke 4 geförderte Elektrodenbandmaterial 3 "auf Zug gebracht" bzw. gespannt, weshalb hier auch von einer aufgebrachten Bahnspannung gesprochen wird, die üblicherweise einfach in Form zur Erzeugung der Bahnspannung aufzubringenden Zugkraft definiert wird. Zusätzlich oder alternativ wird das Elektrodenbandmaterial 3 während des Schritts S2 zumindest abschnittsweise auf eine definierte Temperatur erwärmt (Schritt S2.2). Diese Temperatur ist insbesondere etwa gleich oder größer als 50°C und/oder etwa gleich oder kleiner als 110°C. Weiter insbesondere ist diese Temperatur etwa gleich oder größer als 60°C und/oder etwas gleich oder kleiner als 100°C, ferner insbesondere etwa gleich oder größer als 70°C und/oder etwa gleich oder kleiner als 90°C.

**Fig. 2** zeigt schematisch und beispielhaft die Elektrodenherstelleinrichtung 5 zum Herstellen von Elektrodenstücken 2 gemäß einer beispielhaften Ausführungsform der vorliegenden Erfindung. Die in Fig. 2 beispielhaft gezeigte Elektrodenherstelleinrichtung 5 umfasst eine Elektrodenbandmaterial-Bereitstelleinrichtung 11, die Förderstrecke 4, die auch als Elektrodenbandmaterial-Förderstrecke 4 bezeichnet werden kann, und die Schneideinrichtung 6 zum Vereinzeln des Elektrodenbandmaterials 3 zu einzelnen Elektrodenstücke 2. Dabei ist in Fig. 2 nur ein Bereich der Förderstrecke 4, der auch als Elektrodenbandmaterial-Förderstreckenbereich 12 bezeichnet werden kann, genauer dargestellt.

In dem Elektrodenbandmaterial-Förderstreckenbereich 12 wird das Elektrodenbandmaterial 3 über Antriebswalzen 13 gefördert, die in einer Förderrichtung FR für das Elektrodenbandmaterial 3 gesehen insbesondere am Anfang und am Ende des Elektrodenbandmaterial-Förderstreckenbereichs 12 angeordnet sind. Die Antriebswalzen 13 sind über eine Steuerung (nicht gezeigt) steuerbar und können insbesondere derart gesteuert werden, dass das Aufbringen der Zugkraft zur Erzeugung einer erhöhten Bahnspannung über die Antriebswalzen 13 umgesetzt wird. Zusätzlich oder alternativ ist es auch denkbar, die Zugkraft zur Erzeugung der erhöhten Bahnspannung anderweitig, bspw. mittels ansteuerbaren Elektrodenbandmaterial-Spannungselementen, bspw. Tänzerrollen etc., auf das Elektrodenbandmaterial 3 aufzubringen.

Darüber hinaus ist in der in Fig. 2 gezeigten, beispielhaften Ausführungsform der Elektrodenherstelleinrichtung 5 eine Heizeinrichtung 14 vorgesehen, die senkrecht zur Förderrichtung FR gesehen unterhalb des geförderten Elektrodenbandmaterials 3 angeordnet ist. Ferner ist eine zweite Heizeinrichtung 14 angedeutet (Strichlinie), die der einen Heizeinrichtung 14 gegenüberliegend und beabstandet hierzu, oberhalb des geförderten Elektrodenbandmaterials 3 angeordnet ist. Weitere denkbare, hier nicht explizit gezeigte Ausführungsformen können auch mehr als zwei Heizelemente 14 aufweisen, die nebeneinander oberhalb und/oder unterhalb des geförderten Elektrodenbandmaterials 3 angeordnet sein können. Die Heizeinrichtung 14 ist dazu eingerichtet, dass geförderte Elektrodenbandmaterial 3 auf die vorstehend bereits beschriebene, definierte Temperatur zu erwärmen. Insbesondere muss das Elektrodenbandmaterial 3 nicht über die gesamte Förderstrecke 4 die definierte Temperatur aufweisen. Es ist ausreichend, dass das Elektrodenbandmaterial 3 lediglich entlang eines Abschnitts der Förderstrecke 4 mittels der Heizeinrichtungen 14 auf die definierte bzw. vorbestimmte Temperatur erwärmt wird.

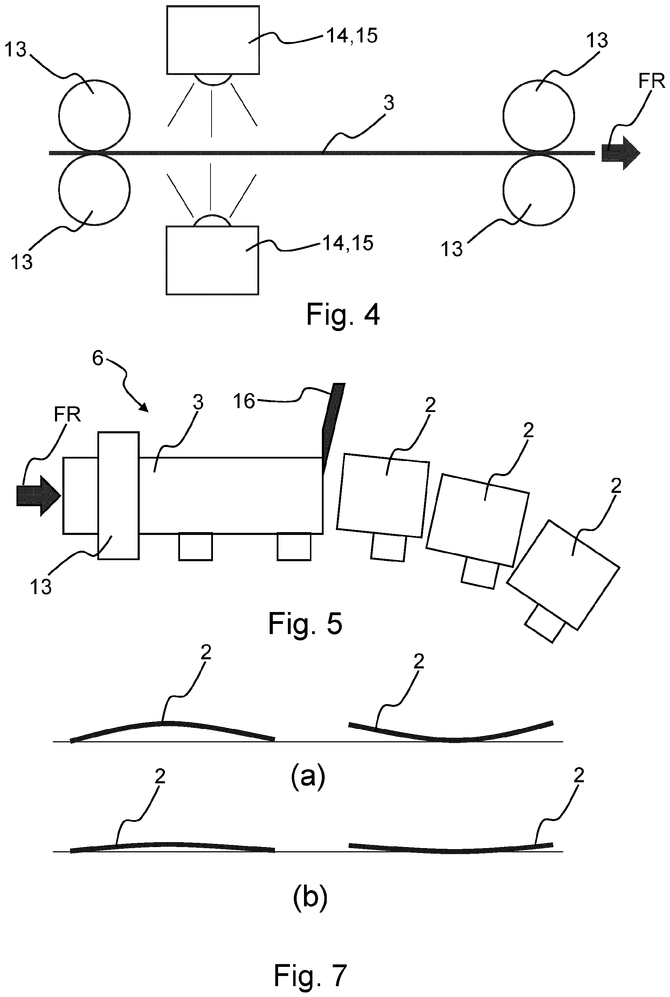

**Fig. 3** und **Fig. 4** zeigen einen Abschnitt des Elektrodenbandmaterial-Förderstreckenbereichs 12 aus Fig. 2, in denen die Heizeinrichtungen 14 beispielhaft als Infrarotstrahler 15 ausgebildet sind. Die Infrarotstrahler 15 ermöglichen insbesondere eine über den gesamten Erwärmungsbereich homogene, also gleichmäßige, Erwärmung des Elektrodenbandmaterials 3. Dadurch ist die definierte bzw. vorbestimmte Temperatur, auf die das Elektrodenbandmaterial 3 erwärmt werden soll, insbesondere einfach einstellbar und/oder regelbar. Fig. 3 (a) und Fig. 3 (b) unterscheiden sich lediglich in der Ausgestaltung des unbeschichteten Bereichs 3.2. Zusätzlich zu der in Fig. 4 gezeigten beispielhaften Anordnung, bei der die zwei IR-Strahler 15 einander im Wesentlichen exakt gegenüberliegend angeordnet sind, ist es auch denkbar, dass die zwei auf einander gegenüberliegenden Seiten des Elektrodenbandmaterials 3 angeordneten IR-Strahler 15 in der Förderrichtung FR gesehen leicht versetzt zueinander angeordnet sind.

**Fig. 5** zeigt eine beispielhafte, schematische und sehr vereinfachte Darstellung der Schneideinrichtung 6 der Elektrodenherstelleinrichtung 5 gemäß einer beispielhaften Ausführungsform. Hier wird das im Elektrodenbandmaterial-Förderstreckenbereich 12 mit erhöhter Bahnspannung geförderte und durch die Heizeinrichtungen 14 zumindest abschnittsweise auf die vorbestimmte Temperatur erwärmte, und zwischenzeitlich auf die Umgebungstemperatur wieder abgekühlte Elektrodenbandmaterial 3 mittels eine Schneidvorrichtung 16, bspw. eine Klinge, zur Elektrodenstücken 2 vereinzelt.

**Fig. 7** dient zur Veranschaulichung von Auswirkungen des Elektrodenherstellverfahrens 1 auf eine Krümmung, die nach der Vereinzelung des Elektrodenbandmaterials 3 bei den einzelnen Elektrodenstücken 2 zu beobachten ist. Dabei zeigt Fig. 7 (a) beispielhaft die Krümmung eines Elektrodenstücks 2, wenn es bei Elektrodenherstellprozess das vorstehend beschriebene, insbesondere erfindungsgemäße, Elektrodenherstellverfahren 1 nicht durchläuft. Demgegenüber zeigt Fig. 7 (b) beispielhaft die Krümmung eines Elektrodenstücks 2, das während des Elektrodenherstellprozesses das vorstehend beschriebene, insbesondere erfindungsgemäße Elektrodenherstellverfahren 1 durchläuft. Es ist zu erkennen, dass die Krümmung eines einzelnen Elektrodenstücks 2 durch das Elektrodenherstellverfahren 1 deutlich, insbesondere um etwa 50% bis etwa 90%, weiter insbesondere um etwa 60% bis etwa 80%, reduziert werden kann. Dadurch kann eine Handhabbarkeit der Elektrodenstücke 2 für nachfolgende Prozessschritte verbessert werden.

Die in Fig. 7 beispielhaft gezeigte Krümmung bei Elektrodenstücken 2 kann in beide Erstreckungsrichtungen, also in der Länge L und/oder in der Breite B (siehe auch Fig. 6), des Elektrodenstücks 2 auftreten, was Nachfolgeprozesse beeinflussen kann. Insbesondere hat die Krümmung der Elektrodenstücke 2 einen negativen Einfluss auf die Effizienz und Qualität nachfolgender Verarbeitungsschritte, der mit zunehmend stark ausgeprägter Krümmung, die umgangssprachlich auch als "Bananeneffekt" bezeichnet wird, zunimmt. Mit anderen Worten kann man sagen, je geringer die Krümmung der vereinzelten Elektrodenstücke 2, desto geringer der durch die Krümmung hervorgerufene, negative Einfluss auf die Effizienz und Qualität nachfolgender Verarbeitungsschritte.

### BEZUGSZEICHENLISTE

- 1: Elektrodenherstellverfahren
- 2: Elektrodenstück
- 3: Elektrodenbandmaterial
- 3.1: beschichteter Bereich
- 3.2: unbeschichteter Bereich
- 4: Förderstrecke
- 5: Elektrodenherstelleinrichtung
- 6: Schneideinrichtung
- 7: Aktivmaterialbereich
- 8: unbearbeiteter Ableiterbereich
- 9: bearbeiteter Ableiterbereich
- 10: Ableiterfahne
- 11: Elektrodenbandmaterial-Bereitstelleinrichtung
- 12: Elektrodenbandmaterial-Förderstreckenbereich
- 13: Antriebswalze
- 14: Heizeinrichtung
- 15: Infrarotstrahler
- 16: Schneidvorrichtung

- S1-S4: Schritt
- S2.1, S2.2: Teilschritt
- BS: Bearbeitungsschritt
- FR: Förderrichtung
- L: Länge
- B: Breite

## Patentansprüche

1. Elektrodenherstellverfahren (1) zum Herstellen von Elektrodenstücken (2), insbesondere Kathoden, für Batteriezellen, umfassend die folgenden Schritte:
Bereitstellen eines Elektrodenbandmaterials (3), das einen beschichteten Bereich (3.1) und an wenigstens einer Seite des beschichteten Bereichs (3.1) einen unbeschichteten Bereich (3.2) aufweist;
Fördern des Elektrodenbandmaterials (3) durch eine Förderstrecke (4), wobei
zur Erzeugung einer vorbestimmten Bahnspannung eine Zugkraft größer als 0 N auf das Elektrodenbandmaterial (3) aufgebracht wird; und
das Elektrodenbandmaterial (3) zumindest abschnittsweise auf eine Erwärmungstemperatur gleich oder größer als 50°C und/oder gleich oder kleiner als 110 C erwärmt wird.

2. Elektrodenherstellverfahren (1) nach Anspruch 1, wobei das Elektrodenbandmaterial (3) ein vorgefertigtes Elektrodenbandmaterial ist, das als den beschichteten Bereich (3.1) einen Aktivmaterialbereich (7) aufweist, und der unbeschichtete Bereich (3.2) an zumindest einer Seite des Aktivmaterialbereichs (7) als Ableiterfahnen (10) ausgebildet ist.

3. Elektrodenherstellverfahren (1) nach Anspruch 1, wobei das Elektrodenbandmaterial (3) ein unbearbeitetes Elektrodenbandmaterial ist, das als den beschichteten Bereich (3.1) einen Aktivmaterialbereich (7) aufweist, und der unbeschichtete Bereich (3.2.) an zumindest einer Seite des Aktivmaterialbereichs (7) als nicht-zugeschnittener Ableiterbereich (8) ausgebildet ist.

4. Elektrodenherstellverfahren (1) nach einem der vorstehenden Ansprüche, wobei die zur Erzeugung der vorbestimmten Bahnspannung auf das Elektrodenbandmaterial (3) aufgebrachte Zugkraft gleich oder größer als 20 N und/oder gleich oder kleiner als 60 N ist, insbesondere gleich oder größer als 30 N und/oder gleich oder kleiner als 50 N ist.

5. Elektrodenherstellverfahren (1) nach einem der vorstehenden Ansprüche, wobei das Elektrodenbandmaterial (3) mittels zumindest einer Heizeinrichtung (14) auf die Erwärmungstemperatur gleich oder größer als 50°C und/oder gleich oder kleiner als 110°C, insbesondere gleich oder größer als 60°C und/oder gleich oder kleiner als 100°C, weiter insbesondere gleich oder größer als 70°C und/oder gleich oder kleiner als 90°C, erwärmt wird.

6. Elektrodenherstellverfahren (1) nach einem der vorstehenden Ansprüche, ferner umfassend:
Fördern des mit der vorbestimmten Bahnspannung beaufschlagten und zumindest abschnittsweise auf die Erwärmungstemperatur erwärmten Elektrodenbandmaterials (3) zu einer Schneideinrichtung (6),
Freischneiden von Ableiterfahnen (10) aus dem Ableiterbereich (8), und/oder
Vereinzeln eines mit Ableiterfahne (10) versehenen Elektrodenstücks (2) durch Durchschneiden des Elektrodenbandmaterials (3).

7. Elektrodenherstelleinrichtung (5) zum Herstellen von Elektrodenstücken (2), insbesondere Kathoden, für Batteriezellen, umfassend:
eine Elektrodenbandmaterial-Bereitstelleinrichtung (11) zum Bereitstellen eines Elektrodenbandmaterials (3), wobei das Elektrodenbandmaterial (3) einen beschichteten Bereich (3.1) und an wenigstens einer Seite des beschichteten Bereichs (3.1) einen unbeschichteten Bereich (3.2) aufweist,
eine Elektrodenbandmaterial-Förderstrecke (4) zum Fördern des Elektrodenbandmaterials (3), wobei
die Elektrodenbandmaterial-Förderstrecke (4) dazu eingerichtet ist, beim Fördern zur Erzeugung einer vorbestimmten Bahnspannung eine Zugkraft größer als 0 N, insbesondere größer als 5 N, weiter insbesondere größer als 10 N, auf das Elektrodenbandmaterial (3) aufzubringen, und
eine Elektrodenbandmaterial-Heizeinrichtung (14), die im Bereich der Elektrodenband-Förderstrecke (4) angeordnet und dazu eingerichtet ist, das Elektrodenbandmaterial (3) zumindest abschnittsweise auf eine Erwärmungstemperatur gleich oder größer als 50°C und gleich oder kleiner als 110°C, insbesondere gleich oder größer als 60°C und gleich oder kleiner als 100°C, weiter insbesondere gleich oder größer als 70°C und/oder gleich oder kleiner als 90°C, zu erwärmen.

8. Elektrodenherstelleinrichtung (5) nach Anspruch 7, wobei das Elektrodenbandmaterial (3) ein vorgefertigtes Elektrodenbandmaterial ist, das als den beschichteten Bereich (3.1) einen Aktivmaterialbereich (7) aufweist, und der unbeschichtete Bereich (3.2) an zumindest einer Seite des Aktivmaterialbereichs (7) als Ableiterfahnen (10) ausgebildet ist.

9. Elektrodenherstelleinrichtung (5) nach Anspruch 7, wobei das Elektrodenbandmaterial (3) ein unbearbeitetes Elektrodenbandmaterial ist, das als den beschichteten Bereich (3.1) einen Aktivmaterialbereich (7) aufweist, und der unbeschichtete Bereich (3.2) an zumindest einer Seite des Aktivmaterialbereichs (7) als nicht-zugeschnittener Ableiterbereich (8) ausgebildet ist.

10. Elektrodenherstelleinrichtung (5) nach einem der Ansprüche 7 bis 9, wobei die Elektrodenbandmaterial-Förderstrecke (4) dazu eingerichtet ist, beim Fördern zur Erzeugung der vorbestimmten Bahnspannung eine Zugkraft gleich oder größer als 20 N und/oder gleich oder kleiner als 60 N, insbesondere gleich oder größer als 30 N und/oder gleich oder kleiner als 50 N, auf das Elektrodenbandmaterial (3) aufzubringen.

11. Elektrodenherstelleinrichtung (5) nach einem der Ansprüche 7 bis 10, wobei die Elektrodenbandmaterial-Heizeinrichtung (14) zumindest einen Heizstrahler, insbesondere zumindest einen Infrarotstrahler (15), aufweist.

12. Elektrodenherstelleinrichtung (5) nach Anspruch 11, wobei der zumindest eine Heizstrahler im Wesentlichen senkrecht zu einer Elektrodenbandmaterial-Oberfläche und/oder beabstandet zu der Elektrodenbandmaterial-Oberfläche angeordnet ist.

13. Elektrodenherstelleinrichtung (5) nach Anspruch 11 oder 12, wobei die Elektrodenbandmaterial-Heizeinrichtung (14) zumindest zwei Heizstrahler, insbesondere zumindest zwei Infrarotstrahler (15), aufweist, die im Wesentlichen senkrecht zu einer Elektrodenbandmaterial-Oberfläche und/oder beabstandet zu einer Elektrodenbandmaterial-Oberfläche und/oder auf derselben Seite des Elektrodenbandmaterials (3) und/oder auf einander gegenüberliegenden Seiten des Elektrodenbandmaterials (3) angeordnet sind.

14. Elektrodenherstelleinrichtung (5) nach einem der Ansprüche 7 bis 13, ferner umfassend:
eine Schneideinrichtung (6) zum Freischneiden von Ableiterfahnen (10) aus dem Ableiterbereich (8) und/oder zum Vereinzeln eines mit freigeschnittener Ableiterfahne (10) versehenen Elektrodenstücks (2) durch Durchschneiden des Elektrodenbandmaterials (3).
